# DEMANDE DE BREVET EUROPEEN

(11) **EP 0 634 712 A1**
(43) Date de publication de la demande: **18.01.1995**
(21) Numéro de dépôt: 94401356.4
(22) Date de dépôt: 16.06.1994
(51) Int. Cl.: G05B 19/418, B25J 9/16

(54) **Procédé de conception et de réalisation d'un préhenseur polyvalent destiné à assembler des pièces présentant entre elles des variations de dimensions**

(30) Priorité: 12.07.1993 FR 9308544
(71) Demandeur: AUTOMOBILES PEUGEOT, F-75116 Paris (FR); AUTOMOBILES CITROEN, F-92200 Neuilly sur Seine (FR)
(72) Inventeur: Gorce, Philippe, F-75007 Paris (FR); Bidaud, Philippe, F-94000 Creteil (FR)
(74) Mandataire: Robert, Jean-François

(57) **Abrégé**

Procédé de conception et de réalisation d'un préhenseur polyvalent destiné à manipuler et a fixer des pièces (A) présentant entre elles des variations de dimensions.

Les différents éléments du préhenseur tels que les pinces (5,6) et leurs moyens de commande et de déplacement (7,8) sont déterminés en fonction des variations dimensionnelles des pièces en choisissant, parmi toutes les solutions possibles pour saisir les pièces par leurs surfaces arêtes ou sommets. celle qui minimise les efforts à exercer.

Application à la manipulation d'une pièce devant être fixée sur une autre à l'aide d'un robot devant effectuer lui-même la manutention et l'assemblage.

## Description

L'invention concerne un procédé de conception et de réalisation d'un préhenseur polyvalent destiné à être monté sur un robot pour saisir et assembler des pièces parallélépipédiques ou, plus généralement, polyédriques, de grandes dimensions et de masses importantes, et présentant entre elles des variations de dimensions.

Jusqu'ici, pour concevoir un tel préhenseur, on déterminait au cas par cas, selon les pièces à saisir, le nombre et la nature des moyens de saisie (pinces, ventouses, moyens de serrage, etc...), leur dimensionnement et les déplacements qu'il était nécessaire de leur faire subir afin d'adapter le préhenseur à chaque type de pièce.

L'invention a pour objet un procédé beaucoup plus général permettant d'analyser le problème de façon exhaustive, de manière à aboutir dans tous les cas à la solution optimale.

Selon la principale caractéristique du procédé objet de l'invention, celui-ci comprend les étapes suivantes:
a) - définition des mobilités de configuration et de fonctionnement nécessaires au préhenseur;
b) - analyse des éléments tels que surfaces, arêtes et sommets pouvant servir à la saisie des pièces;
c) - détermination de la meilleure configuration de saisie;
d) - définition des mécanismes de saisie;
e) - définition de la chaîne cinématique du préhenseur; et
f) - réalisation du préhenseur à l'aide des résultats des étapes d) et e).

Selon d'autres caractéristiques de ce procédé:
- la définition des mobilités de configuration consiste à tenir compte des variations géométriques entre les différentes pièces à manipuler et à déterminer les moyens de déplacement des différents moyens de saisie du préhenseur tels que pinces ou ventouses pour se conformer à ces variations géométriques;
- la définition des mobilités de fonctionnement consiste à déterminer tous les déplacements que le robot doit faire effectuer aux différentes pièces en contournant d'éventuels obstacles pour réaliser la trajectoire d'assemblage;
- l'étape b) consiste à établir la liste des surfaces, arêtes et sommets de la pièce et à éliminer ceux qui présentent un contact en position initiale ou en position finale ainsi que ceux dont le volume en regard, en position initiale ou en position finale, est insuffisant pour approcher un moyen de saisie;
- l'étape c) consiste à retenir les configurations de saisie satisfaisant au critère de stabilité minimum en vérifiant la positivité des valeurs singulières de la matrice de saisie et à calculer, pour chaque configuration retenue, les efforts aux contacts de manière à choisir en définitive la configuration qui minimise la somme des efforts;
- l'étape d) consiste à dimensionner les éléments tels que pinces et les éléments tels que vérins qui les mettent en action en tenant compte de la répartition des efforts qui correspondent à la configuration retenue:
- l'étape e) consiste à disposer sur un châssis les moyens de saisie et les moyens de déplacement des moyens de saisie en tenant compte des mobilités nécessaires et des efforts à vaincre;
- pour les mobilités de configuration comme pour les mobilités de fonctionnement, les structures des chaînes cinématiques comportant des translations, des rotations et des articulations sont définies, dans un premier temps, de manière à satisfaire les mobilités nécessaires et, dans un deuxième temps, pour toutes les solutions retenues, les efforts et couples aux articulations sont déterminés de manière à sélectionner la solution optimale qui minimise la somme des efforts, chaque effort ne devant toutefois pas dépasser un seuil prédéterminé.

L'invention apparaîtra mieux à la lecture de la description qui va suivre, donnée uniquement à titre d'exemple, en référence aux dessins annexés, dans lesquels:
- la Figure 1 est une vue schématique en plan de trois pièces à manipuler, ces pièces ayant même forme générale mais présentant entre elles des variations de dimensions;
- la Figure 2 est une vue en perspective de l'une de ces pièces avec la désignation de toutes les surfaces de cette pièce;
- les Figures 3 et 4 sont des vues en perspective montrant une pièce en position initiale et en position finale respectivement;
- la Figure 5 est une vue en perspective illustrant les volumes disponibles pour la saisie des pièces en position initiale (partie gauche) et en position finale (partie droite);
- les Figures 6 et 7 sont des vues en perspective illustrant respectivement les arêtes et les sommets utilisables pour la saisie;
- la Figure 8 est une vue en perspective montrant les points retenus pour saisir une pièce; et
- la Figure 9 est une vue schématique en perspective du préhenseur réalisé par le procédé de l'invention.

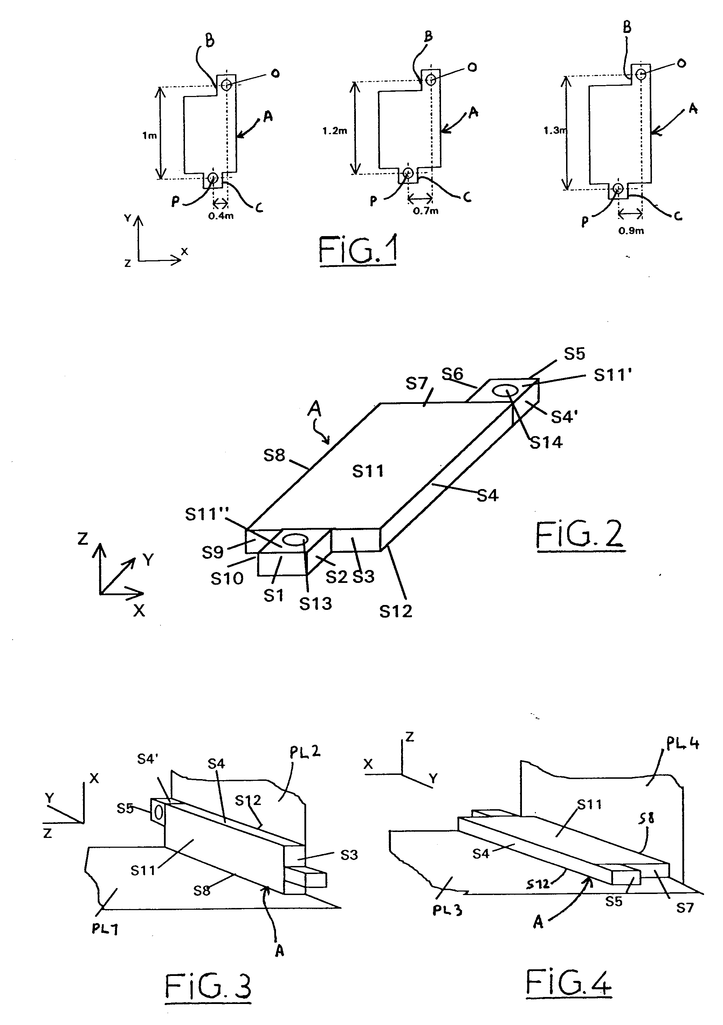

Si l'on se reporte à la figure 1, on voit que les pièces à manipuler A se composent d'une juxtaposition de parallélépipèdes rectangles dont les dimensions sont variables. Chaque pièce se présente sous la forme d'une plaque rectangulaire comportant, à chacune de ses extrémités, une languette B,C présentant un trou destiné à recevoir un rivet pour fixer la pièce sur un autre élément, les centres des trous des languettes B et C étant désignés respectivement par O et P.

La première étape du procédé consiste à déterminer les mobilités de configuration, c'est-à-dire essentiellement à prendre en compte les variations dimensionnelles des pièces. Dans le cas particulier pris pour exemple, on choisit d'abord un point de référence commun aux trois pièces, en l'occurrence le point O, et on détermine, par rapport aux trois axes de coordonnées Oₓ, O_{y} et O_{z} centrés sur ce point, les différentes variations de dimensions.

Dans la présente description, on conviendra de désigner par Tₓ et T_{y} l'amplitude des variations dimensionnelles suivant Oₓ et O_{y}. On voit d'après la figure 1 que l'on peut écrire Tₓ [0,4;0,9] et T_{y} [1;1,3] pour désigner les déplacements du point P: celui-ci a donc une amplitude de mobilité de 0,5m suivant l'axe des x et de 0,3m suivant l'axe des y.

La première étape du procédé comprend en outre la détermination des mobilités de fonctionnement telle que définie plus haut, ce qui ne pose aucun problème dans le cas particulier. En effet, dans un but de simplification, on supposera qu'il n'y a aucun obstacle au déplacement des pièces, ni à la mise en oeuvre des outils d'assemblage: on peut donc dire que, dans cet exemple, les contraintes pour les mobilités de fonctionnement sont les mêmes que pour les mobilités de configuration.

La deuxième étape du procédé consiste en l'analyse des éléments des pièces (surfaces, arêtes, sommets) pouvant servir à leur saisie.

Pour cela, on commence par déterminer les surfaces de saisie. Dans un premier temps, on fait l'inventaire de toutes les surfaces que présente la pièce. Comme on le voit sur la figure 2, celle-ci présente dix-sept surfaces et, si l'on désigne par Sa l'ensemble de ces surfaces, on peut écrire:

Sₐ = {S₁, S₂, S₃, S₄, S_{4'}, S₅, S₆, S₇, S₈, S₉, S₁₀, S₁₁, S_{11'}, S_{11''}, S₁₂, S₁₃, S₁₄}

Bien que les surfaces S₄ et S_{4'} d'une part, S₁₁, S_{11'} et S_{11''} d'autre part soient dans un même plan. on les différencie pour plus de commodité, notamment parce qu'elle n'appartiennent pas au même parallélépipède.

On élimine ensuite les surfaces interdites parce que trop fragiles ou déformables: dans l'exemple choisi, aucune n'est concernée.

Puis on détermine les surfaces interdites parce qu'elles sont en contact avec d'autres surfaces soit en position initiale. soit en position finale. Les figures 3 et 4 qui illustrent les positions initiale et finale de la pièce A montrent qu'en position initiale, celle-ci est en contact avec un plan horizontal PL1 et un plan vertical PL2 et, en position finale, avec un plan horizontal PL3 et un plan vertical PL4, la pièce ayant des orientations différentes dans ces deux positions.

Il résulte de l'observation des figures 3 et 4 qu'aussi bien en position initiale qu'en position finale, les surfaces S₈ et S₁₂ présentent un contact.

Si l'on désigne par 1Sp l'ensemble des surfaces de saisie possibles pour la première pièce, on peut écrire:

1Sₚ = {S₁, S₂, S₃, S₄, S₅, S₆, S₇, S₉, S₁₀, S₁₁, S_{11'}, S_{11''}}

On remarquera que les surfaces S₁₃ et S₁₄ sont également à éliminer car elles correspondent aux trous destinés à recevoir le rivets pendant que la pièce est maintenue par le préhenseur.

Dans le cas particulier, 2Sₚ et 3Sₚ sont identiques à 1Sₚ puisque les pièces ont même configuration générale.

L'opération suivante est la détermination des volumes de saisie, c'est-à-dire les volumes disponibles pour faire évoluer chaque moyen de saisie. Pour cela, on projette chaque surface de 1Sₚ suivant une direction perpendiculaire a elle-même jusqu'à ce qu'elle rencontre un obstacle, aussi bien en position initiale qu'en position finale, et on élimine toutes les surfaces dont le volume en regard est insuffisant pour faire évoluer un moyen de saisie, soit en position initiale, soit en position finale.

Si l'on désigne par V_{Si} le volume en regard de la surface Sᵢ, l'ensemble des volumes utilisables pour la première pièce s'écrit:

1V_{S} = {V_{S1}, V_{S2}, V_{S3}, V_{S4}, V_{S5}, V_{S6}, V_{S7}, V_{S9}, V_{S10}, V_{S11}}

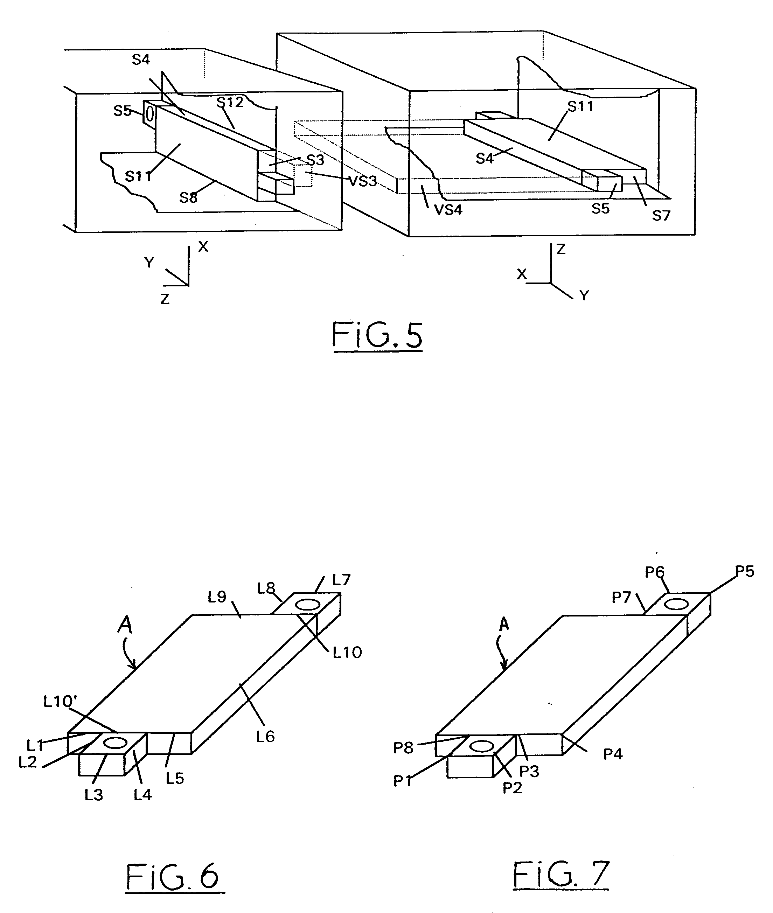

comme cela apparaît d'après la figure 5 en observant que les volumes V_{S4} et V_{S11} correspondent à l'ensemble des surfaces S₄ et S_{4'} d'une part, S₁₁, S_{11'} et S_{11''} d'autre part.

Pour ne pas surcharger le dessin, seuls V_{S3} et V_{S4} ont été représentés sur la figure 5. D'autre part, toujours dans un but de simplification, on admettra que chaque volume V_{Si} est suffisant pour approcher un moyen de saisie.

On détermine ensuite les lignes et les points de saisie possibles: les lignes possibles sont l'intersection de deux surfaces possibles et les points possibles l'intersection de trois surfaces possibles.

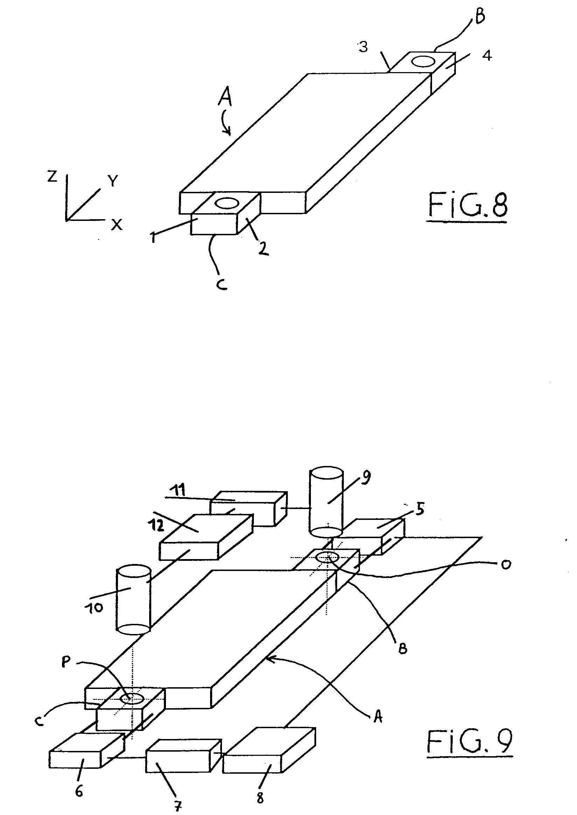

La figure 6 montre l'ensemble des lignes utilisables et la figure 7 l'ensemble des points utilisables.

Si l'on désigne par Lᵢ et Pᵢ les arêtes et sommets des pièces, l'ensemble des éléments de saisie possibles pour la première pièce s'écrit:

1Eₛₒₗ = {S₁, S₂, S₃, S₄, S_{4'}, S₅, S₆, S₇, S₉, S₁₀, S₁₁, S_{11'}, S_{11''}, L₁, L₂, L₃, L₄, L₅, L₆, L₇, L₈, L₉, L₁₀, L_{10'}, P₁, P₂, P₃, P₄, P₅, P₆, P₇, P₈}

Bien que colinéaires, les arêtes L₉ et L₁₀ d'une part, L₁, L₅ et L_{10'} d'autre part, ont été différenciées car elles ne sont pas adjacentes aux mêmes surfaces (figure 6).

On comprend donc qu'en examinant les solutions correspondant à chaque pièce, on peut déterminer une solution générale valable pour toutes les pièces en retenant les surfaces, lignes et points communs à toutes les pièces. Dans l'exemple choisi, 1a solution générale est la même que les solutions particulières pour la raison indiquée plus haut.

On passe ensuite à la troisième étape du procédé qui est la détermination de la meilleure configuration de saisie.

Pour cela, on conviendra que le point de contact du moyen de saisie avec une surface se trouve au centre géométrique de cette surface et le point de contact avec une arête au milieu de celle-ci.

Pour réaliser la troisième étape du procédé, on détermine d'abord les masses des pièces à manipuler ainsi que leurs centres de gravité, les coefficients de frottement entre les pièces et les doigts de la pince ou un autre moyen de saisie et le coefficient de torsion. On détermine également les équations des normales aux points de contact et les distances aux centres de gravité des points des pièces qui sont les plus éloignés de ces derniers.

On détermine ensuite la matrice de saisie en écrivant les conditions d'équilibre des pièces tenues par les moyens de saisie et ceci dans toutes les configurations considérées comme possibles.

On applique ensuite le critère de stabilité minimum en calculant les valeurs singulières de la matrice de saisie: seules les configurations pour lesquelles ces valeurs sont positives seront retenues.

Finalement, on choisit, parmi les configurations restantes, celle qui minimise la somme des valeurs absolues des efforts au contact, étant bien entendu que chaque effort pris en particulier ne doit pas dépasser un seuil prédéterminé.

La figure 8 montre les points finalement retenus qui sont les points 1 et 2 sur la languette C et les points 3 et 4 sur la languette B.

Le tableau suivant indique la répartition des efforts en ces points:

| Point 1 | Point 2 | Point 3 | Point 4 |
|---|---|---|---|
| Fx = -5 N | Fx = -5 N | Fx = 0 | Fx = 0 |
| Fy = 28.5 N | Fy = 30 N | Fy = 31.5 N | Fy = 30 N |
| Fz = 95 N | Fz = 100 N | Fz = 105 N | Fz = 100 N |
| Mx = -3,5 Nm | Mx = -3,5 Nm | Mx = 0 | Mx = 0 |
| My = 19,95 Nm | My = 21 Nm | My = 22,05 Nm | My = 21 Nm |
| Mz = 66,5 Nm | Mz = 70 Nm | Mz = 73,5 Nm | Mz = 70 Nm |

Ce tableau a été réalisé en supposant que le coefficient de frottement était égal à 0,7 et le coefficient de torsion à 0,7 également. De plus, pour chaque point, les composantes des forces et des moments sont exprimées dans un repère lié à ce point et dans lequel l'axe des z est perpendiculaire à la surface de la pièce et dirigé vers l'intérieur de celle-ci.

On constate que, dans l'exemple choisi, le procédé conduit à une solution à quatre points de saisie après avoir éliminé les solutions à deux et trois points qui conduisent à des efforts excessifs; en effet, le procédé peut être mis en oeuvre à l'aide d'un ordinateur et celui-ci peut être programmé pour rechercher la solution qui minimise les efforts avec le minimum de points de saisie.

Il faut ensuite définir les mécanismes de saisie, ce qui constitue la quatrième étape du procédé.

Pour cela. il est nécessaire de déterminer les courses que doivent effectuer les parties mobiles des actionneurs. ainsi que les efforts et les couples qu'ils doivent exercer. Les inventeurs ont vérifié que. dans le cas particulier illustrant le procédé les pinces disponibles dans le commerce peuvent contenir, ce qui dispense de réaliser un moyen de préhension propre à l'exemple à traiter.

Il reste encore à définir la chaîne cinématique du préhenseur en tenant compte des efforts développés, ce qui constitue la cinquième étape du procédé.

La détermination des chaînes cinématiques assurant les mobilités de configuration et de fonctionnement se fait en deux temps à partir des variations définies dans la première étape du procédé.

Dans un premier temps, on définit la structure des chaînes (rotations, translations, position des articulations, etc...) de manière à satisfaire les mobilités nécessaires. On établit ainsi la liste exhaustive des solutions possibles et, dans un deuxième temps, on détermine pour chacune d'elles les efforts correspondants. En fin de compte, on choisit la solution qui minimise la somme des efforts tout en respectant des seuils puisque chaque effort doit rester en deçà d'un seuil prédéterminé.

La figure 9 montre schématiquement en perspective la solution qui a été retenue dans l'exemple choisi pour illustrer l'invention. Le préhenseur a été équipé de deux pinces pour saisir la pièce par les deux pattes précitées et de deux riveteuses pour placer des rivets dans les trous des languettes B et C.

Plus précisément, sur le châssis (non représenté) du préhenseur, on a prévu une pince fixe 5 destinée à saisir la patte B par les points de saisie 3 et 4 illustrés à la figure 8. Une deuxième pince 6, mobile en translation suivant les directions X et Y grâce aux mécanismes 7 et 8, saisit la pièce par la patte C, c'est-à-dire aux points 1 et 2. Une première riveteuse fixe 9 assure la mise en place du rivet correspondant au point O tandis qu'une deuxième riveteuse 10, mobile en translation suivant X et Y grâce à des mécanismes 11 et 12. assure la mise en place du rivet correspondant au point P.

L'invention permet donc, grâce à un procédé unique, de réaliser un préhenseur polyvalent, c'est-à-dire permettant de manipuler des pièces et de les fixer, parfaitement adapté quel que soit le type de pièce à saisir. On comprendra en outre que, même si la description a été faite en référence à des pièces polyédriques, le procédé peut facilement être généralisé à des pièces de forme quelconque ou même à des ensembles de pièces reliées entre elles par des moyens souples ainsi qu'à des pièces hétérogènes comprenant un balourd, ou encore à des pièces minces, par exemple en tôle.

## Revendications

1. Procédé de conception et de réalisation d'un préhenseur polyvalent destiné à être monté sur un robot pour saisir et assembler des pièces (A), notamment polyédriques, de grandes dimensions et de masses importantes et présentant entre elles des variations de dimensions, caractérisé en ce qu'il comprend les étapes suivantes:
a) - définition des mobilités de configuration et de fonctionnement nécessaires au préhenseur;
b) - analyse des éléments tels que surfaces (Sᵢ), arêtes (Lᵢ) et sommets (Pᵢ) pouvant servir à la saisie des pièces (A);
c) - détermination de la meilleure configuration de saisie;
d) - définition des mécanismes de saisie;
e) - définition de la chaîne cinématique du préhenseur; et
f) - réalisation du préhenseur à l'aide des résultats des étapes d) et e).

2. Procédé selon la revendication 1, caractérisé en ce que la définition des mobilités de configuration consiste à tenir compte des variations géométriques entre les différentes pièces (A) à manipuler et à déterminer les moyens de déplacement des différents moyens de saisie du préhenseur tels que pinces (5,6) ou ventouses pour se conformer à ces variations géométriques.

3. Procédé selon l'une quelconque des revendications 1 et 2, caractérisé en ce que la définition des mobilités de fonctionnement consiste à déterminer tous les déplacements que le robot doit faire effectuer aux différentes pièces (A) en contournant d'éventuels obstacles pour réaliser la trajectoire d'assemblage.

4. Procédé selon l'une quelconque des revendications 1 à 3, caractérisé en ce que l'étape b) consiste à établir la liste des surfaces (Sᵢ), arêtes (Lᵢ) et sommets (Pᵢ) de la pièce (A) et à éliminer ceux qui présentent un contact en position initiale ou en position finale ainsi que ceux dont le volume en regard, en position initiale ou en position finale, est insuffisant pour approcher un moyen de saisie.

5. Procédé selon l'une quelconque des revendications 1 à 4, caractérisé en ce que l'étape c) consiste à retenir les configurations de saisie satisfaisant au critère de stabilité minimum en vérifiant la positivité des valeurs singulières de la matrice de saisie et à calculer, pour chaque configuration retenue, les efforts aux contacts de manière à choisir en définitive la configuration qui minimise la somme des efforts.

6. Procédé selon l'une quelconque des revendications 1 à 5, caractérisé en ce que l'étape d) consiste à dimensionner les éléments tels que pinces (5,6) et les éléments tels que vérins qui les mettent en action en tenant compte de la répartition des efforts qui correspondent à la configuration retenue.

7. Procédé selon l'une quelconque des revendications 1 à 6, caractérisé en ce que l'étape e) consiste à disposer sur un châssis les moyens de saisie (5,6) et les moyens de déplacement (7,8) des moyens de saisie (5,6) en tenant compte des mobilités nécessaires et des efforts à vaincre.

8. Procédé selon l'une quelconque des revendications 1 à 7, caractérisé en ce que, pour les mobilités de configuration comme pour les mobilités de fonctionnement, les structures des chaînes cinématiques comportant des translations, des rotations et des articulations sont définies, dans un premier temps de manière à satisfaire les mobilités nécessaires et, dans un deuxième temps, pour toutes les solutions retenues, les efforts et couples aux articulations sont déterminés de manière à sélectionner la solution optimale qui minimise la somme des efforts, chaque effort ne devant toutefois pas dépasser un seuil prédéterminé.
